# EUROPEAN PATENT SPECIFICATION

(11) **EP 3 463 738 B1**
(45) Date of publication and mention of the grant of the patent: **18.03.2020**
(21) Application number: 17732245.0
(22) Date of filing: 22.05.2017
(51) Int. Cl.: B23K 20/00, B23K 26/364, B23C 3/30, B21C 37/08, B32B 3/30, B32B 33/00, B32B 37/14, B32B 38/04, E04F 15/06

(54) **CLAD PLATE AND PROCESS OF PRODUCING CLAD PLATE**
PLATTIERTES BLECH UND VERFAHREN ZUR HERSTELLUNG DES PLATTIERTEN BLECHS
TÔLE PLAQUÉE ET SON PROCÉDÉ DE FABRICATION

(30) Priority: 27.05.2016 NL 2016851
(43) Date of publication of application: 10.04.2019
(73) Proprietor: G.C.C. Holding B.V., 4301 RC Zierikzee (NL)
(72) Inventor: DE JONG, Johannes, NL-4301 RC Zierikzee (NL); AGGENBACH, Etienne, NL-4301 RC Zierikzee (NL); DE JONG, Cor, NL-4301 RC Zierikzee (NL)
(74) Representative: Taneja, Bipin
(86) International application number: PCT/NL2017/050322
(87) International publication number: WO 2017/204628

(56) References cited:
- WO-A1-2015/033895
- US-A- 2 423 811
- US-A- 2 904 880
- US-A- 2 943 388
- US-A- 3 987 529

## Description

### BACKGROUND OF THE INVENTION

The invention relates to a process of producing a clad plate. In addition, the invention relates to a clad plate and to items comprising such a clad plate.

Clad plates comprise a first or base layer, which first layer is intended for providing required (design) constructional strength to an object incorporating the clad plate, of a first material and on either one side or both sides thereof a second or cladding layer, which second layer provides wear-resistance, of a second material that is different than the first material. The materials can vary in regard of their chemical structure, mechanical properties and hardness, depending on the envisaged use. The first material and/or the second material can comprise an alloy, e.g. an alloy that is a mixture of metals (e.g. iron and any of e.g. manganese, nickel, chromium, molybdenum, vanadium, silicon, boron, aluminium, cobalt, copper, cerium, niobium, titanium, tungsten, tin, zinc, lead and zirconium) or a mixture of a metal and another element (example: an iron-carbon alloy, steel).

The first material is typically a relatively ductile material, in particular a carbon steel or a low-alloy steel. The second material is typically a relatively brittle material and can be comprise, for example, a ferritic or austenitic stainless steel, nickel- and nickel-based alloy, copper-nickel alloy or titanium. Usually, the cladding layer is of a hardened (second) material having a yield strength that is higher than the yield strength of the (first) material of the base layer. The second layer may be bonded to the first layer, for instance by means of roll-bonding, explosion-bonding or pressure-temperature bonding. Typically, the bond between the relatively ductile base layer and the relatively hard, and often brittle, cladding layer is metallurgical.

The clad plate can be used in the form of a flat plate or a slightly curved plate, such as in use as wear plates in loading spaces in ships, lorries or train wagons for the transport of bulk goods. Alternatively, the clad plate can be used in a bent form, in particular in use as vessels, pipe spools, pipe loops, pipe elbows, straight pipes, pipe bends, pipe fittings, et cetera.

In practice, during a process of shaping an item such as a clad plate, in particular straightening a clad plate, it may happen that the item is subject to bending forces whereby the tensile or compressive strength of the cladding layer is exceeded. This subjection to an excessive force will result in a problem of material failure, e.g. a fracture in the item.

A similar problem may occur in use, as when the item formed by the clad plate can happen to be subjected to large impact and/or bending forces such that the tensile or compressive strength of the cladding layer is exceeded. An example in regard of flat plates relates to the forces exerted by bulk-good moving equipment present in a loading space, such as a shovel or a crane. An example in regard of bent plates relates to a floating pipeline in an offshore operation, whereby swell movements can cause excessive bending forces. In the event of the (brittle) cladding layer failing, the base layer will fail subsequently, for its tensile or compression strength is lower than that of the cladding layer. As a consequence, the whole item will fail, possibly without any clear prior indication or warning, and in a case wherein substances or liquids are contained within or by means of the item, the (marine) environment will be polluted and possibly also humans and other living creatures will be endangered.

A process of producing a clad plate according to the background art is described in US 2,423,811. Slits are made in a temporary cover which protects the cladding layer during welding with the base layer.

### SUMMARY OF THE INVENTION

It is an object of the invention to provide a clad plate of the type according to the preamble, which clad plate is less prone to failure than known clad plates of a similar constitution.

It is an object of the invention to provide a process of producing such a clad plate.

According to one aspect of the invention, there is provided a process of producing a clad plate comprising a first, structural-strength-providing base layer of a first material and on at least one side thereof a second, wear-resistance-providing cladding layer of a second material, wherein the first material and the second material are relatively ductile and brittle, respectively, whereby the process comprises the steps of:
- placing the second layer onto the first layer to form a multilayer plate assembly;
- (preferably thereafter) making slits in the second layer,
- wherein the slits are made as to extend from the outer surface of the second layer towards the boundary with the first layer, preferably to extend throughout the whole thickness of the second layer.

The slits form purposive locations in the relatively brittle second layer whereby a predetermined degree of allowable deformation is provided in the event of large bending forces, of whatever nature e.g. tensile or compressive, being exerted on the clad plate during shaping or when in use. The provision of a predetermined degree of allowable deformation applies both to items in which the clad plate is flat or slightly curved and to items in which the clad plate is bent, such as in pipelines, ducts or vessels. The slits prevent a build-up of tension in the second layer that will exceed the yield strength of the material of the second layer. The predetermined location(s) of the slits may also be beneficial during shaping, with the slit areas providing purposive and selectable locations to allow for bending or folding of the clad plate in any particular or desired shape.

The first layer is for providing structural strength to the clad plate and the second layer is for providing wear-resistance to the clad plate.

The material of the first layer and/or the material of the second layer may be an alloy. Any or all of the alloys of the layer(s) of the first and second items should be understood to comprise a solid mixture of metals or a solid mixture of a metal and another element, e.g. a metal-carbon alloy. An alloy within the meaning of the present invention should be understood to be a solid-state compound exhibiting metallic bonding, and with a de-fined stoichiometry and ordered crystal structure. An alloy should be understood to be a (solid) solution of metal elements, either as a single-phase compound, a multi-phase compound or an intermetallic compound.

The base layer may be made of a metal-carbon alloy.

The cladding layer may be made of one of a material of the group consisting of ferritic and austenitic stainless steels, nickel-based alloys and copper-nickel alloys. Alternatively, or additionally, the cladding layer may comprise nickel or titanium.

The tensile strength of any suitable material for the first and second layers may lie in the range of 400-2500 MPa. Relative ductility and brittleness between the materials of the two layers can usually be expressed as a difference of 500-2000 MPa between their tensile strengths.

The slits can have various shapes with respect to their cross-section(s) and distribution across the second layer. Preferably, the slits are made as straight (rectilinear) slits. In some cases, curvilinear slits may be more appropriate. According to one embodiment, the slits are made in a pattern of parallel slits. The parallel slits can be made to be evenly spaced from one another. Alternatively, the spacings between slits can vary (i.e. have a varying pitch), depending on the location on the item in its envisaged position of use.

In order to accommodate for the occurrence of high bending forces in more than one direction, the slits can be made according to at least two groups, whereby the groups have different slit orientations or directions. According to one embodiment, the slits are made in two groups of slits whereby the groups extend perpendicularly in relation to each other.

The cross-section(s) of the slits may vary. The slits may, for instance, have a V-shape, i.e. with upwardly diverging flanks, or a U-shape with parallel flanks. Likewise, the depth of the slits may vary. For example, considering that the first layer and the second layer engage each other at a plane of interface, the lower end of the slits can be arranged to lie in the plane of interface. Alternatively, the lower end of the slits may be made to extend to below the plane of interface, i.e. to extend into the first or base layer itself. It should be clear that the deeper a slit extends in the material of the base layer, the easier it will be to deform the plate across the rest of the material of the base layer. This aspect can be advantageous in some applications, e.g. when it is desirable to avail of an easy deformability across the slit. For example, when railroad ore cars, chutes, feed cones, crushers, hoppers, silos, bucket floors or walls, etc. need to be protected with cladded wear plates, standard flat wear plates will be cut to size and bent over any sections that are to be protected to match existing curves or radii in the surfaces of these sections. The thinner the base layer is at the slits, the easier it becomes to form the plates in the desired shape on site without any need for heavy tools or specialized equipment for doing so. Hence, a clad plate according to the invention makes the act of protecting an object by means of a clad plate more easy: less time, effort and costs are required in comparison with the use of conventional clad plates.

In particular when the clad plate is intended to be used in a more or less flat state, the first layer and the second layer may be bonded to each other before making the slits. Then the second layer will be fixed to the first layer and the slits can be purposively and readily made, at the exact desired location(s). Subsequently, the clad plate may be straightened, whereby the slits can prevent the build-up of tension in the second layer that will exceed the yield strength of the material of the second layer. According to one embodiment, the slits are made when the clad plate is kept in a flat state. This allows for making the slits in an easy and well-controlled, reliable way.

Alternatively, in a form wherein the one layer will engage about or around the other layer, such as in a pipe, the clad plate if in a flat state is rolled into a bent shape such as a pipe shape followed by a step of making slits in the cladding layer. It should be clear that slits can be made in the cladding layer of a clad plate either before rolling a flat clad plate into a bent shape or after having rolled a flat clad plate into a bent shape. Preferably, the slits are thereby located in planes that are perpendicular in relation to the local pipe axis or main vessel axis.

The slits should be kept as narrow as possible under the circumstances, so as to keep the interruptions in the protecting surface provided by the cladding layer as small as possible. In general, the slits are preferably made with a slit width and a slit depth whereby the slit depth is larger than the slit width.

By way of example of a flat form, the size of a plate may be 2.5 m x 12 m. The thickness of a plate may range from 5 mm to 60 mm. The thickness of the cladding layer may range from 3 mm to 50 mm. The slit width may range from 1 mm to 5 mm. By way of example of a bent form, the length of a pipe may range up to 18m. The diameter of a pipe may range from 100 mm to 2000 mm. The thickness of the cladding layer may range from 3 mm to 40 mm. The slit width may range from 1 mm to 4 mm.

The process according to the invention can include the step of heating the clad plate for the purpose of hardening the second layer.

The first or base layer should always exhibit ductile properties in order to provide structural strength to the hard, cladded plate as a whole. The first or base layer may be affected by heat treatment. This should not be unfavourable as long as acceptable impact-resistance values, which values may vary depending on the application, are maintained.

In order to prevent corrosion or any other corruption of surfaces of the first layer that define a part or parts of the slit, in particular the lower end of the slit, the first layer surface portion in question can be shielded off by means of a sealing material, preferably an elastic sealing material, in particular an elastic filler material. The sealing material is selected for its suitability to elastically follow the relative movement of the slit flanks (in any direction to or from each other) in order to maintain its protective or shielding function.

According to another aspect, the invention provides a clad plate comprising a first, structural-strength-providing layer of a first material and on at least one side thereof a second, wear-resistance-providing layer of a second material, wherein the first material and the second material are relatively ductile and brittle, respectively, wherein the second layer is provided with slits that open into the exposed surface of the second layer and extend throughout the whole thickness of the second layer.

Further embodiments of clad plates according to the invention are described in the attached claims, the contents of which should be considered as being referenced, repeated and incorporated here.

The aspects and measures described in this description and the claims of the application and shown in the drawings of this application may possibly also be used individually. Said individually applicable aspects may be the subject of divisional patent applications. This may apply in particular to the measures and aspects that are described per se in the dependent claims.

### BRIEF DESCRIPTION OF THE DRAWINGS

The invention will be elucidated with reference to examples shown in the attached drawings, in which:
Figures 1A-1C schematically shows some steps of a process of making a clad plate product according to the invention;
Figures 2A-2B show the clad plate obtainable by the process of Figure 1 in a top-view and a side-view, respectively;
Figures 3A-3B show the clad plate of Figures 2A-2B in a state prior to straightening and after straightening, and some details of the clad plate;
Figure 3C schematically depicts the nature of deformations occurring at and around a slit upon straightening of the clad plate;
Figure 3D depicts a graph of the tension (σ) - elongation (ε) relationship for the materials of both layers 1 and 2;
Figures 3E-3F depict visualizations of the results of a finite-element analysis of an embodiment according to the invention, of which embodiment the nature of deformations occurring at and around the slits upon straightening of the clad plate is depicted in Figure 3C;
Figures 4A-D show some examples of slit configurations in clad plates according to the invention;
Figures 5A-5B schematically depict another embodiment of the clad plate product according to the invention, in a bent form such as in a pipeline, in a cross-sectional view and longitude-sectional view, respectively; and
Figures 6A-6B schematically depict the embodiment according to Figures 5A-5B in an application in a marine environment.

### DETAILED DESCRIPTION OF THE DRAWINGS

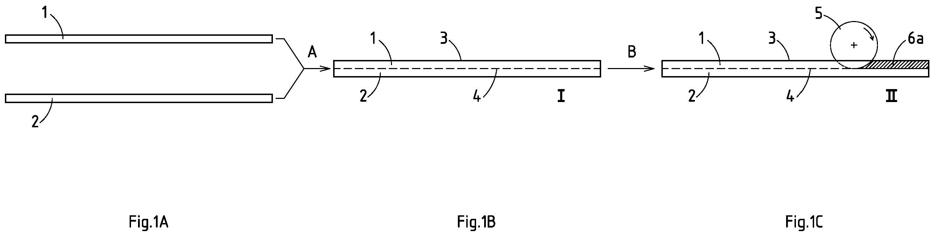

In Figure 1A a plate-shaped second or cladding layer 1 and a plate-shaped first or base layer 2 are shown as being supplied (arrow A) to a bonding station I, see Figure 1B.

In this example, the base layer 2 is made of a carbon-steel alloy and the cladding layer is made of a different alloy. The material of the base layer 2 is ductile in comparison with the material of the cladding layer 1. The material of the cladding layer 1 is in most cases brittle. In station I, the layers 1 and 2 are metallurgically bonded to each other at an interface plane 4 to form a clad plate 3.

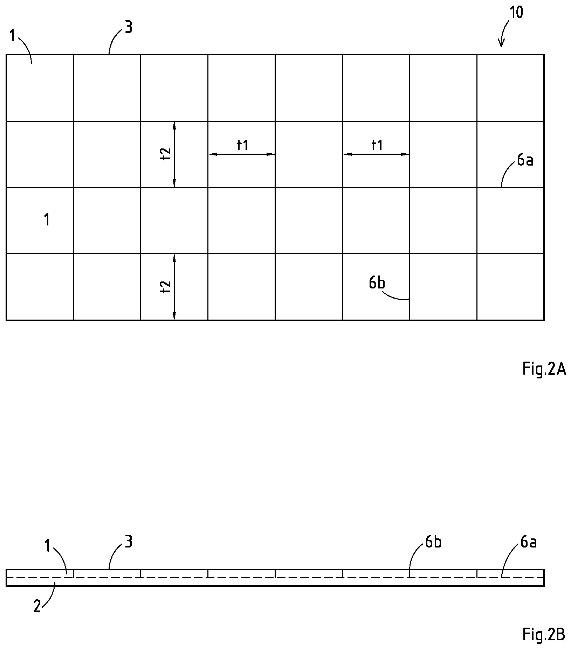

Next, the clad plate 3 is shown as to be transported (arrow B) to a slitting station II, see Figure 1C, where by means of a slitter 5 (for example, a milling tool or a laser) a series of parallel slits 6a are made in the cladding layer 1. The slits 6a are made throughout the whole thickness of the cladding layer 1 (hatched or shaded section). Slitting is done in two steps and in two directions (6a, 6b) that are perpendicular with respect to each other. Figures 2A and 2B depict the resulting clad plate 3 in a top view and a side view, respectively. The clad plate 3 has two groups of slits 6a and 6b. In this example, the slits 6a are evenly spaced, with a pitch t1, and the slits 6b are evenly spaced, with a pitch t2. Different embodiments may require uneven spacings between the slits. The pitch t1 and the pitch t2 may be the same or different, dependent on the desired and predetermined degree of deformation that will be deemed to be allowable. The clad plate 3 is subsequently to be transferred to a hardening and shaping station (not shown), where the clad plate 3 in this example is heated so as to harden and straighten the clad plate 3.

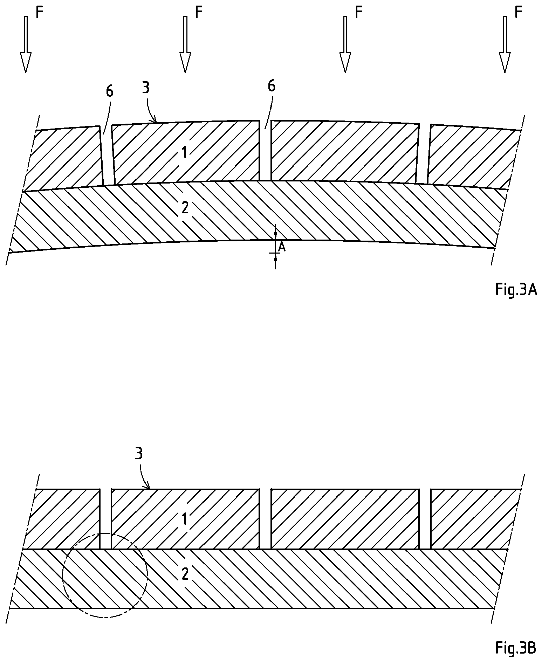

In this process, the clad plate 3, which may have a slightly curved shape as depicted in Figure 3A, is subjected to e.g. an evenly distributed load F. Figure 3B shows the clad plate 3 after the straightening process. The slits can be shaped either collectively or even individually at different angles when an unevenly distributed load F is in play. The reference A is to schematically indicate a deviation of the flatness of the surface as usually expressed in the unit mm/m. By choosing the force that is to be applied to be such that the stress in the base layer 2 exceeds the yield strength of the material of the base layer 2 but does not exceed the yield strength of the cladding layer 1, it is possible to plastically deform the plate locally at the slits and thus shape it in a desired final shape.

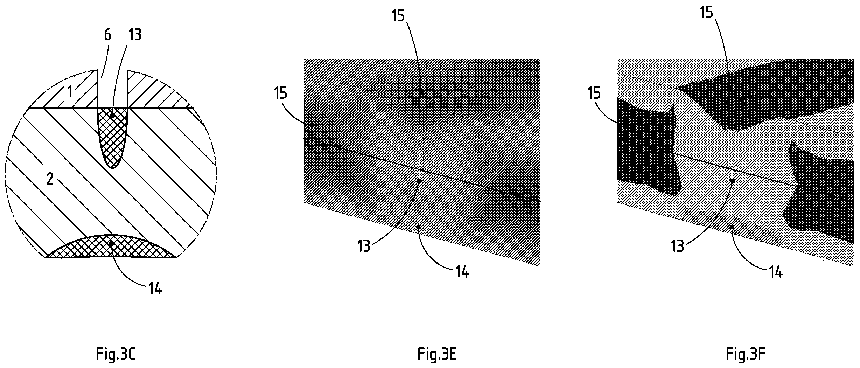

Figure 3C shows the slit 6 and its surroundings in the base layer 2 in detail. The area around slit 6 is subject to compressive tension or tensile tension depending on the location of the load. In the depicted example, the area 13 indicates a section of high compression tension in excess of the yield strength of the material of the base layer 2, in which area section 13 plastic deformation will have occurred, and the area section 14 indicates a section of high tensile tension, in which area section 14 plastic deformation will also have occurred. Figures 3E and 3F shows area sections 15 in which the tensions will have been moderate without any plastic deformation.

Figure 3E is a schematic representation of the results of a finite-element analysis that show how the stress increases locally at a slit upon the exertion of a force in excess of the yield strength of the material of the base layer 2. The numeral 13 refers to an area subject to high compressive forces where plastic deformation shall occur. The numeral 14 refers to an area subject to high tensile forces where also plastic deformation shall occur. The numeral 15 refers to an area where very low stresses shall occur. In this area, only elastic deformation will occur in both materials during a shaping process step.

Figure 3F is a schematic representation of the results of the finite-element analysis of Figure 3E now depicted with an enhanced contrast, and it depicts a clearer though simplified version the areas of low stresses and high stresses shown in Figure 3E. The numeral 13 refers to an area subject to high compressive forces where plastic deformation shall occur. The numeral 14 refers to an area subject to high tensile forces where also plastic deformation shall occur. The numeral 15 refers to an area where very low stresses shall occur. In this area, only elastic deformation will occur in both materials during a shaping process step.

The resulting straightened clad plate 10 can be used as e.g. a wall for a loading space in a ship.

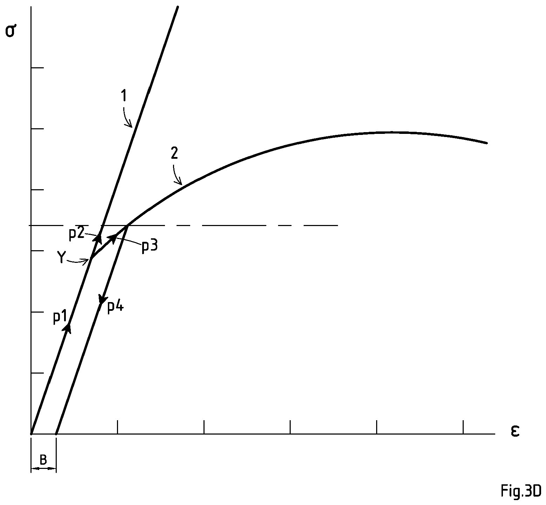

Figure 3D schematically depicts a tension-elongation diagram of both materials 1 and 2, with the tension (σ) resulting from the application of a force shown as a function of the elongation (ε) of the material. The material of the cladding layer 1 is relatively hard and it will not show any meaningful elongation and fail almost immediately under the influence of a force in excess of its yield strength. The material of the base layer 2 will initially display elastic elongation followed by plastic elongation followed by failure under the influence of an increasing load. In order to be able to shape the hardened clad plates it is important to increase the deforming force in a manner and at a rate such that the material of the cladding layer 2 can elastically deform locally at the slits whereby the material of the cladding layer 2 is not subjected to an excessive force. A controlled allowable plastic deformation of the material of the base layer 1 locally at the slits not accompanied by any plastic deformation of the material of the cladding layer 2 locally at the slits makes shaping of the plate in any desired shape possible.

The clad plate layers 1 and 2 exhibit different plastic behaviours. In most cases, the tensile or break stress of the material of the base layer 2 will be considerably lower in comparison with the tensile stress of the material of the cladding layer 1. In most cases, both the materials (usually alloys) of the layers 1 and 2 will have equal or similar values for Young's modulus [elastic modulus]. In Figure 3D, the materials of the two layers are, by way of example, shown as having the same values for Young's modulus. When force is applied to the clad plate, for both materials the resulting tension (σ) shown as a function of the elongation (ε) of the material will be according to the line section p1 up to the yield point Y of the material of the base layer 2. Once the yield point Y of the material of the base layer 2 is reached and more force acts upon the plate, the material of the base layer 2 will start to yield and lead to plastic deformation while the material of the cladding layer 1 will not (yet) yield and still exhibit elastic behaviour. Upon any further increase of the force, the tension (σ) shown as a function of the elongation (ε) of the material of the cladding layer 1 will be according to the line section p2, and the tension (σ) shown as a function of the elongation (ε) of the material of the base layer 2 will be according to the line section p3.

If there is a decrease in the force applied, then the tension (σ) shown as a function of the elongation (ε) of the material of the cladding layer 1 will be according to the reverse path from line section p2 to line section p1. In contrast, the tension (σ) shown as a function of the elongation (ε) of the material of the base layer 2 will be along the path from line section p3 to line section p4 due to plastic deformation of the material of the base layer 2. The resultant permanent strain occasioned in the material of the base layer 2 is indicated by B that stands for the (measure of) permanent elongation or compression of the base material 2 at the slit location. It should be clear that with an appropriate choice of the materials of both layers and an appropriate choice of the nature and extent of slits to be introduced in the material of the cladding layer, the invention provides for the technical advantage of complete control over the degree and nature of deformation that can be deemed to be allowable in either or both layers, hence preventing a build-up of tension or stress in excess of the yield strength of the material of the cladding layer 2 that will result in failure of the clad plate.

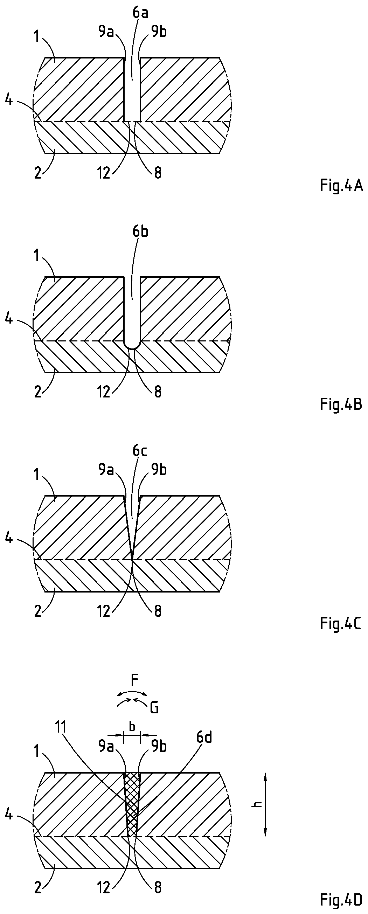

As mentioned above, the slits can have various cross-sections. Figure 4A shows a first example of a cross-section of a U-shaped slit, wherein the slit lower end 8 coincides with the interface plane 4 between the two layers. The flanks 9a and 9b are parallel to each other. The lower end 8 forms a narrow surface portion 12 of base layer 2.

Figure 4B shows an example of a U-shaped slit, in which the slit is deeper in comparison with the slit depicted in Figure 4A and its lower end 8 is located below the interface plane 4 and within the base layer 2. Here, the slit lower end 8 is shaped as a concave surface portion 12 of the base layer 2.

In Figure 4C a V-shaped slit is shown, with the flanks 9a and 9b diverging upwardly and the slit lower end 8 shown as lying in the interface plane 4. In this example the lower end 8 is a line-shaped apex 12.

Figure 4D shows a slit configuration quite similar to that of Figure 4A, though with a difference that according to Figure 4D the flanks 9a and 9b are divergent from each other in an upward direction. Again, the lower end 8 forms a narrow surface portion 12 of base layer 2. In Figure 4D, the slit 6 is depicted as filled with an elastic filler material 11, such as an elastic cement, that adheres to the surfaces of the flanks 9a and 9b and to the base layer surface portion 12. The filler material 11 will not be necessary in case the cladding layer's function is to prevent erosion of the base layer. The filler material 11 may, however, be required for a clad plate in use in an aggressive environment where e.g. corrosion may occur. In such an occasion, the filler material is adapted to remain intact under the influence of any substances or liquids that will be in contact therewith. The filler material 11 is adapted to follow any relative movement of the flank 9a in relation to the flank 9b, so that when the slit width b is enlarged due to a high bending moment F, the filler material will keep the surface portion shielded off from environmental influences, such as humidity, aggressive liquids, et cetera. The filler material 11 may be applied across the full depth h of the slit 6.

As depicted, it is to be understood that the slits 6 allow for a bending deformation in the cladding layer 1 due to the action of the moment F, in which case the cladding layer will be subject to tensile forces. The slits 6 also allow for deformation in the opposite sense in the cladding layer 1 due to the action of bending moment G, in which case the cladding layer will be subject to compression forces. By way of example, the bending moment G may be occasioned when the clad plate e.g. forms part of a floor of a loading space and heavy equipment such as a shovel is driven over the cladding layer.

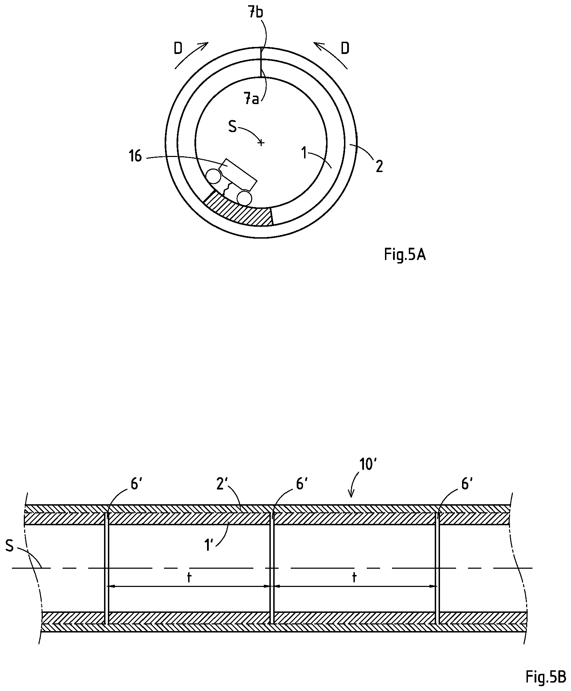

Figures 5A and 5B depict a pipe 10' that has a wall defined by a clad plate according the invention. The base layer 2 and the cladding layer 1 are bent or shaped as a pipe (1', 2'), as seen along the directions D. The meeting edges of the layers 1 and 2 are shown as welded to each other, at 7a and 7b, respectively. The meeting edges of the base layer 2 are always welded to each other. The meeting edges of the cladding layer 1 are usually, but not always, welded to each other. For example, in an application of the clad plate relating to a slurry line, the meeting edges of the cladding layer 1 may not be welded to each other, so there will then be no weld at 7a. The outer diameter of the inner layer (1 in Figure 5A and 1' in Figure 5B) matches the inner diameter of the outer layer (2 in Figure 5A 2' in Figure 5B), i.e. there is a close fit between the two layers. The cladding layer 1' forms the inner layer of the pipe section 10'. In accordance with a process of the invention, slits in the cladding layer can be made either prior to or after shaping the clad plate as, in this example, a pipe. In the example shown in Figures 5A-5B, the slits 6' would have been made by means of e.g. a laser tool 16 that driven in the circumferential direction F and in a plane that is perpendicular in relation to the axis S of the pipe section. Upon traversing across the whole of the circumference of the pipe, slit 6' would have been created, and the tool 16 would have been moved axially across a distance t to an adjacent position for making a next slit 6'.

In Figure 5B the slits 6' are depicted as being parallel to each other and perpendicular in relation to the local pipe axis S. The slits 6' are evenly spaced (with a pitch t) in a longitudinal direction. The shape of the slits 6' corresponds to that of the slit depicted in Figure 4A, as discussed above.

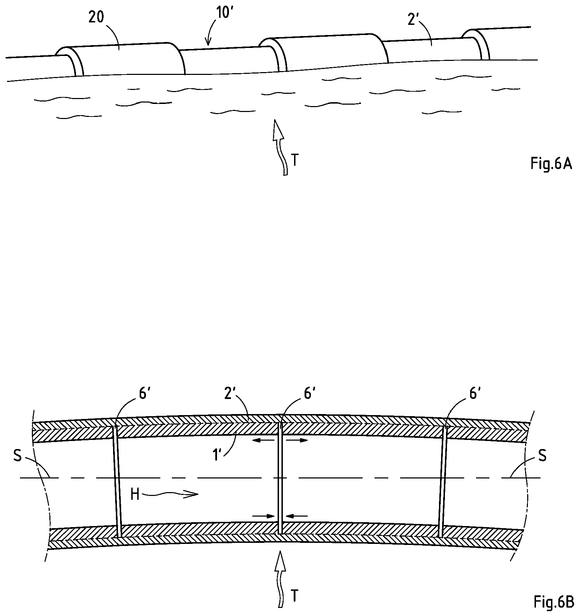

A pipe section according to Figures 5A-5B can be used, for instance, for transporting dredge slurry from a dredging vessel at sea to a shore. The pipe section 10' may then be supported by a series of floating bodies 20 that surround the pipeline at intervals, e.g. as depicted in Figure 6A. The cladding layer 1' will be located on the inside, with reference to Figures 5A-5B, and it will be in contact with the slurry stream H.

The floating pipe section 10' may be subject to large bending forces, for instance due to tidal streams T or due to swell, as schematically indicated in Figures 6A and 6B. On the convex side of the pipe section 10', the cladding layer 1' will be subject to tensile forces and on the opposite, concave side the cladding layer 1' will be subject to compressive forces. Due to the interruptions in the surface of the cladding layer 1', as expressed in the form of the slits 6', the cladding layer 1' incorporates a predetermined degree of allowable deformation, thus preventing a build-up of tension or stress in excess of the yield strength of the material of the cladding layer.

## Claims

1. Process of producing a clad plate (3) comprising a first, structural-strength-providing base layer (2) of a first material and on at least one side thereof a second, wear-resistance-providing cladding layer (1) of a second material, wherein the first material and the second material are relatively ductile and brittle, respectively, whereby the process comprises the steps of:
- placing the second layer (1) onto the first layer (2) to form a multilayer plate assembly;
- making slits (6, 6a, 6b) in the second layer (1),
- wherein the slits (6, 6a, 6b) are made as to extend from the outer surface of the second layer (1) towards the boundary with the first layer (2), preferably to extend throughout the whole thickness of the second layer (1).

2. Process according to claim 1, wherein the slits (6, 6a, 6b) are made as straight slits, preferably according to a pattern of parallel slits.

3. Process according to claim 2, wherein the parallel slits are evenly spaced from one another.

4. Process according to claim 2 or 3, wherein the slits (6, 6a, 6b) are made according to at least two groups, whereby the groups have different slit orientations or directions.

5. Process according to claim 4, wherein the slits are made in two groups of slits whereby the groups extend perpendicularly in relation to each other.

6. Process according to any of the preceding claims, wherein the first, base layer (2) and the second, cladding layer (1) are bonded to each other at a plane of interface (4).

7. Process according to any of the preceding claims, wherein the lower ends of the slits (6, 6a, 6b) lie in the plane of interface (4).

8. Process according to claim 6, wherein the base layer (2) and the cladding layer (1) are bonded to each other at a plane of interface (4), wherein the lower ends of the slits (6, 6a, 6b) extend to below the plane of interface (4).

9. Process according to any of the preceding claims, wherein the slits (6, 6a, 6b) are made with a slit width and a slit depth whereby the slit depth is larger than the slit width.

10. Process according to any of the preceding claims, comprising the step of heating the clad plate (3) for hardening the second layer (1).

11. Process according to any of the preceding claims 1-10, comprising the step of:
- after placing the second layer (1) onto the first layer (2) and making slits (6, 6a, 6b) in the second layer (1), bending the first and second layers into a bent shape in accordance with the final bent shape of the clad plate (3), in particular a vessel, pipe spool, pipe loop, pipe elbow, straight pipe, pipe bend, or pipe fitting.

12. Process according to any of the preceding claims 1-10, comprising the step of:
- after placing the second layer (1) onto the first layer (2) and before making slits (6, 6a, 6b) in the second layer (1), bending the first and second layers into a bent shape in accordance with the final bent shape of the clad plate (3), in particular a vessel, pipe spool, pipe loop, pipe elbow, straight pipe, pipe bend, or pipe fitting.

13. Process according to any of the preceding claims, wherein, in the event that a portion of the first layer surface defines a part or parts of the slit (6, 6a, 6b), the first layer surface portion is shielded off by means of a sealing material, preferably an elastic sealing material.

14. Clad plate (3) obtainable by a process according to any of claims 1-13, comprising a first, structural-strength-providing base layer (2) of a first material and on at least one side thereof a second, wear-resistance-providing cladding layer (1) of a second material, wherein the first material and the second material are relatively ductile and brittle, respectively, wherein the second layer (1) is provided with slits (6, 6a, 6b) that open into the exposed surface of the second layer (1) and extend towards the boundary with the first layer (2), preferably extend throughout the whole thickness of the second layer (1).

15. Clad plate (3) obtainable by a process according to any of claims 1-10 and 13, whereby the clad plate (3) is in the form of a flat plate.

16. Clad plate (3) obtainable by a process according to any of claims 11-13, whereby the clad plate (3) forms a vessel, pipe spool, pipe loop, pipe elbow, straight pipe, pipe bend or pipe fitting.

17. Clad plate (3) according to any of claims 14-16, wherein the cladding layer (1) comprises an alloy, in particular an alloy made of one of a material of the group consisting of ferritic and austenitic stainless steels, nickel-based alloys and copper-nickel alloys, or comprises titanium.

18. Clad plate (3) according to any of claims 14-17, wherein the cladding layer (1) is made of an alloy that is a mixture of metals such as iron and any of manganese, nickel, chromium, molybdenum, vanadium, silicon, boron, aluminium, cobalt, copper, cerium, niobium, titanium, tungsten, tin, zinc, lead and zirconium, or a mixture of a metal and another element such as an iron-carbon alloy, steel.

## Patentansprüche

1. Verfahren zum Herstellen eines plattierten Blechs (3), umfassend eine erste, Strukturfestigkeit bereitstellende Basisschicht (2) aus einem ersten Material und auf mindestens einer Seite davon, eine zweite, Verschleißfestigkeit bereitstellende Plattierungsschicht (1) aus einem zweiten Material, wobei das erste Material und das zweite Material relativ duktil bzw. spröde sind, wobei das Verfahren die folgenden Schritte umfasst:
- Aufbringen der zweiten Schicht (1) auf die erste Schicht (2), um eine mehrschichtige Plattenanordnung zu bilden;
- Herstellen von Schlitzen (6, 6a, 6b) in der zweiten Schicht (1),
- wobei die Schlitze (6, 6a, 6b) so hergestellt sind, dass sie sich von der Außenfläche der zweiten Schicht (1) bis zur Grenze mit der ersten Schicht (2) erstrecken, sie sich vorzugsweise über die gesamte Dicke der zweiten Schicht (1) erstrecken.

2. Verfahren nach Anspruch 1, wobei die Schlitze (6, 6a, 6b) als gerade Schlitze hergestellt werden, vorzugsweise gemäß einem Muster von parallelen Schlitzen.

3. Verfahren nach Anspruch 2, wobei die parallelen Schlitze gleichmäßig voneinander beabstandet sind.

4. Verfahren nach Anspruch 2 oder 3, wobei die Schlitze (6, 6a, 6b) gemäß mindestens zwei Gruppen hergestellt werden, wobei die Gruppen unterschiedliche Schlitzorientierungen oder -richtungen aufweisen.

5. Verfahren nach Anspruch 4, wobei die Schlitze in zwei Gruppen von Schlitzen hergestellt sind, wobei sich die Gruppen senkrecht zueinander erstrecken.

6. Verfahren nach einem der vorhergehenden Ansprüche, wobei die erste Basisschicht (2) und die zweite Plattierungsschicht (1) in einer Grenzflächenebene (4) miteinander verbunden sind.

7. Verfahren nach einem der vorhergehenden Ansprüche, wobei die unteren Enden der Schlitze (6, 6a, 6b) in der Grenzflächenebene (4) liegen.

8. Verfahren nach Anspruch 6, wobei die Basisschicht (2) und die Plattierungsschicht (1) in einer Grenzflächenebene (4) miteinander verbunden sind, wobei sich die unteren Enden der Schlitze (6, 6a, 6b) bis unter die Grenzflächenebene (4) erstrecken.

9. Verfahren nach einem der vorhergehenden Ansprüche, wobei die Schlitze (6, 6a, 6b) mit einer Schlitzbreite und einer Schlitztiefe hergestellt sind, wobei die Schlitztiefe größer als die Schlitzbreite ist.

10. Verfahren nach einem der vorhergehenden Ansprüche, umfassend den Schritt des Erhitzens des plattierten Blechs (3) zum Härten der zweiten Schicht (1).

11. Verfahren nach einem der vorhergehenden Ansprüche 1-10, umfassend den folgenden Schritt:
- nach dem Aufbringen der zweiten Schicht (1) auf die erste Schicht (2) und dem Herstellen von Schlitzen (6, 6a, 6b) in der zweiten Schicht (1), Biegen der ersten und zweiten Schicht in eine gebogene Form gemäß der endgültigen gebogenen Form des plattierten Blechs (3), insbesondere ein Gefäß, ein Rohrspool, eine Rohrschleife, ein Knierohr, ein gerades Rohr, ein Rohrbogen oder ein Rohrformstück.

12. Verfahren nach einem der vorhergehenden Ansprüche 1-10, umfassend den folgenden Schritt:
- nach dem Aufbringen der zweiten Schicht (1) auf die erste Schicht (2) und vor dem Herstellen von Schlitzen (6, 6a, 6b) in der zweiten Schicht (1), Biegen der ersten und zweiten Schicht in eine gebogene Form gemäß der endgültigen gebogenen Form des plattierten Blechs (3), insbesondere ein Gefäß, ein Rohrspool, eine Rohrschleife, ein Knierohr, ein gerades Rohr, ein Rohrbogen oder ein Rohrformstück.

13. Verfahren nach einem der vorhergehenden Ansprüche, wobei für den Fall, dass ein Teil der Oberfläche der ersten Schicht einen Teil oder Teile des Schlitzes (6, 6a, 6b) definiert, der Oberflächenteil der ersten Schicht mittels eines Dichtungsmaterials, vorzugsweise eines elastischen Dichtungsmaterials, abgeschirmt wird.

14. Plattiertes Blech (3), das durch ein Verfahren nach einem der Ansprüche 1-13 erhalten werden kann, umfassend eine erste, Strukturfestigkeit bereitstellende Basisschicht (2) aus einem ersten Material und auf mindestens einer Seite davon, eine zweite, Verschleißfestigkeit bereitstellende Plattierungsschicht (1) aus einem zweiten Material, wobei das erste Material und das zweite Material relativ duktil bzw. spröde sind, wobei die zweite Schicht (1) mit Schlitzen (6, 6a, 6b) versehen ist, die in die freiliegende Oberfläche der zweiten Schicht (1) münden und sich in Richtung der Grenze zur ersten Schicht (2) erstrecken und sich vorzugsweise über die gesamte Dicke der zweiten Schicht (1) erstrecken.

15. Plattiertes Blech (3), das durch ein Verfahren nach einem der Ansprüche 1-10 und 13 erhalten werden kann, wobei das plattierte Blech (3) die Form einer flachen Platte aufweist.

16. Plattiertes Blech (3), das durch ein Verfahren nach einem der Ansprüche 11-13 erhalten werden kann, wobei das plattierte Blech (3) ein Gefäß, einen Rohrspool, eine Rohrschleife, ein Knierohr, ein gerades Rohr, einen Rohrbogen oder ein Rohrformstück bildet.

17. Plattiertes Blech (3) nach einem der Ansprüche 14-16, wobei die Plattierungsschicht (1) eine Legierung umfasst, insbesondere eine Legierung aus einem Material aus der Gruppe bestehend aus ferritischen und austenitischen rostfreien Stählen, Legierungen auf Nickelbasis und Kupfer-Nickel-Legierungen, oder Titan umfasst.

18. Plattiertes Blech (3) nach einem der Ansprüche 14-17, wobei die Plattierungsschicht (1) aus einer Legierung besteht, die eine Mischung aus Metallen, wie etwa Eisen und einem beliebigen aus Mangan, Nickel, Chrom, Molybdän, Vanadium, Silizium, Bor, Aluminium, Kobalt, Kupfer, Cer, Niob, Titan, Wolfram, Zinn, Zink, Blei und Zirkonium ist, oder eine Mischung aus einem Metall und einem anderen Element, wie etwa einer Eisen-Kohlenstoff-Legierung, Stahl.

## Revendications

1. Procédé de production d'une tôle plaquée (3) comprenant une première couche de base fournissant une résistance structurelle (2) d'un premier matériau sur au moins un de ses côtés une seconde couche de placage fournissant une résistance à l'usure (1) d'un second matériau, dans lequel le premier matériau et le second matériau sont relativement ductiles et friables, respectivement, selon lequel le procédé comprend les étapes consistant à :
- placer la seconde couche (1) sur la première couche (2) afin de former un ensemble de plaque multicouche ;
- réaliser des fentes (6, 6a, 6b) dans la seconde couche (1),
- dans lequel les fentes (6, 6a, 6b) sont fabriquées de manière à s'étendre depuis la surface extérieure de la seconde couche (1) en direction de la limite avec la première couche (2), de préférence s'étendre à travers l'épaisseur totale de la seconde couche (1).

2. Procédé selon la revendication 1, dans lequel les fentes (6, 6a, 6b) sont réalisées comme des fentes droites, de préférence conformément à un motif de fentes parallèles.

3. Procédé selon la revendication 2, dans lequel les fentes parallèles sont uniformément espacées les unes des autres.

4. Procédé selon la revendication 2 ou la revendication 3, dans lequel les fentes (6, 6a, 6b) sont réalisées conformément à au moins deux groupes, selon lesquels les groupes comportent des orientations ou des directions de fente différentes.

5. Procédé selon la revendication 4, dans lequel les fentes sont réalisées en deux groupes de fentes, selon lesquels les groupes s'étendent perpendiculairement les uns par rapport aux autres.

6. Procédé selon l'une quelconque des revendications précédentes, dans lequel la première couche de base (2) et la seconde couche de placage (1) sont liées l'une à l'autre au niveau d'un plan d'interface (4).

7. Procédé selon l'une quelconque des revendications précédentes, dans lequel les extrémités inférieures des fentes (6, 6a, 6b) se trouvent dans le plan d'interface (4).

8. Procédé selon la revendication 6, dans lequel la couche de base (2) et la couche de placage (1) sont liées l'une à l'autre au niveau d'un plan d'interface (4), dans lequel les extrémités inférieures des fentes (6, 6a, 6b) s'étendent en dessous du plan d'interface (4) .

9. Procédé selon l'une quelconque des revendications précédentes, dans lequel les fentes (6, 6a, 6b) sont réalisées avec une largeur de fente et une profondeur de fente, selon lesquelles la profondeur de fente est supérieure à la largeur de fente.

10. Procédé selon l'une quelconque des revendications précédentes, comprenant l'étape de chauffage de la tôle plaquée (3) permettant le durcissement de la seconde couche (1).

11. Procédé selon l'une quelconque des revendications 1-10 précédentes, comprenant l'étape consistant à :
- après avoir positionné la seconde couche (1) sur la première couche (2) et réalisé les fentes (6, 6a, 6b) dans la seconde couche (1), plier les première et seconde couches en une forme incurvée conformément à la forme incurvée finale de la tôle plaquée (3), en particulier un récipient, une bobine de tuyauterie, une boucle de tuyau, un coude de tuyau, un tronçon de conduit cylindrique, une courbe en tube ou un raccord de tuyau.

12. Procédé selon l'une quelconque des revendications 1-10 précédentes, comprenant l'étape consistant à :
- après avoir positionné la seconde couche (1) sur la première couche (2) et avant de réaliser les fentes (6, 6a, 6b) dans la seconde couche (1), plier les première et seconde couches en une forme incurvée conformément à la forme incurvée finale de la tôle plaquée (3), en particulier un récipient, une bobine de tuyauterie, une boucle de tuyau, un coude de tuyau, un tronçon de conduit cylindrique, une courbe en tube ou un raccord de tuyau.

13. Procédé selon l'une quelconque des revendications précédentes, dans lequel, dans le cas où une partie de la première surface de couche définit une partie ou des parties de la fente (6, 6a, 6b), la première partie de surface de couche est protégée au moyen d'un matériau d'étanchéité, de préférence un matériau d'étanchéité élastique.

14. Tôle plaquée (3) pouvant être obtenue au moyen d'un procédé selon l'une quelconque des revendications 1 à 13, comprenant une première couche de base fournissant une résistance structurelle (2) d'un premier matériau et sur au moins un de ses côtés une seconde couche de placage fournissant une résistance à l'usure (1) d'un second matériau, dans laquelle le premier matériau et le second matériau sont relativement ductiles et friables, respectivement, dans laquelle la seconde couche (1) est munie de fentes (6, 6a, 6b) qui s'ouvrent dans la surface exposée de la seconde couche (1) et s'étendent en direction de la limite avec la première couche (2), de préférence s'étendent à travers l'épaisseur totale de la seconde couche (1).

15. Tôle plaquée (3) pouvant être obtenue au moyen d'un procédé selon l'une quelconque des revendications 1 à 10 et 13, selon lequel la tôle plaquée (3) est de la forme d'une plaque plate.

16. Tôle plaquée (3) pouvant être obtenue au moyen d'un procédé selon l'une quelconque des revendications 11 à 13, selon laquelle la tôle plaquée (3) est un récipient, une bobine de tuyauterie, une boucle de tuyau, un coude de tuyau, un tronçon de conduit cylindrique, une courbe en tube ou un raccord de tuyau.

17. Tôle plaquée (3) selon l'une quelconque des revendications 14 à 16, dans laquelle la couche de placage (1) comprend un alliage, en particulier un alliage fabriqué à partir d'un matériau du groupe constitué des aciers inoxydables ferritiques et austénitiques, des alliages à base de nickel et des alliages de cuivre et de nickel, ou comprend du titane.

18. Tôle plaquée (3) selon l'une quelconque des revendications 14 à 17, dans laquelle la couche de placage (1) est fabriquée à partir d'un alliage qui est un mélange de métaux tels que le fer et l'un quelconque parmi le manganèse, le nickel, le chrome, le molybdène, le vanadium, la silice, le bore, l'aluminium, le cobalt, le cuivre, le cérium, le niobium, le titane, le tungstène, l'étain, le zinc, le plomb et le zirconium, ou un mélange d'un métal et d'un autre élément tel qu'un alliage de fer et de carbone, d'acier.
